# EUROPEAN PATENT SPECIFICATION

(11) **EP 2 670 209 B1**
(45) Date of publication and mention of the grant of the patent: **25.09.2019**
(21) Application number: 13169375.6
(22) Date of filing: 27.05.2013
(51) Int. Cl.: H04W 76/15, H04W 88/04, H04W 76/14

(54) **Method and apparatus for providing concurrent service**
Verfahren und Vorrichtung zur Bereitstellung eines simultanen Dienstes
Procédé et appareil pour fournir un service concurrent

(30) Priority: 30.05.2012 KR 20120057524
(43) Date of publication of application: 04.12.2013
(73) Proprietor: Samsung Electronics Co., Ltd., Gyeonggi-do 443-742 (KR)
(72) Inventor: Son, Jong-Kuck, Gyeongsangbuk-do (KR)
(74) Representative: Nederlandsch Octrooibureau

(56) References cited:
- US-A1- 2011 069 650
- US-A1- 2012 020 258
- US-A1- 2012 057 536
- US-A1- 2012 108 185

## Description

### FIELD OF THE INVENTION

The present invention relates to a method and apparatus for providing a concurrent service using a wireless Local Area Network (LAN) communication system.

### BACKGROUND OF THE INVENTION

As electronic devices supporting a wireless Local Area Network (LAN) communication system increase in use, research is conducted to provide various services using the wireless LAN communication system in the electronic device.

For example, an electronic device provides a concurrent service which supports two different frequency bands at the same time. That is, the electronic device receives content from a connectable device storing the content via a wireless Access Point (AP) or Wireless Fidelity (Wi-Fi) Direct using a first frequency band, and sends content to another electronic device (e.g., TV) using a second frequency band.

As new functions using Wi-Fi are added, other use functions such as web browsing, a Wi-Fi Direct P2P connection, Voice over Internet Protocol (VoIP) communication, and Wi-Fi Display are increasing at the same time.

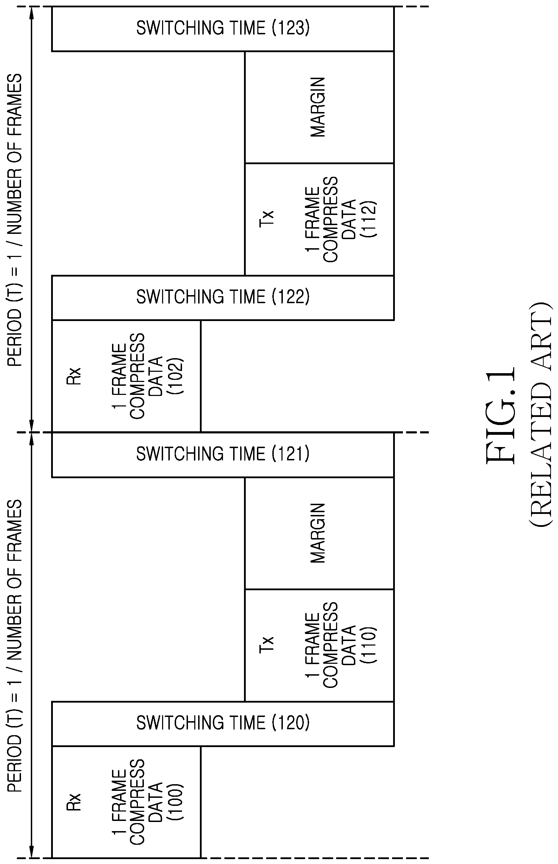

However, electronic devices according to the related art include a communication module in which a Media Access Control (MAC) layer and a PHYsical (PHY) layer are in the single structure and the electronic device has to select and conduct only one of signal reception and signal transmission at a particular time. As a result, data throughput is limited and a delay occurs because simultaneous data reception and transmission are not feasible. That is, the electronic device according to the related art, which supports two frequency bands using one MAC layer and one PHY layer, performs the signal reception and the signal transmission by switching between the frequency bands supported by the MAC layer and the PHY layer. Referring to FIG. 1, to support the concurrent service, the electronic device according to the related art receives content from an external electronic device over a first frequency band in steps 100 and 102, switches the MAC layer and the PHY layer from the Receive (Rx) frequency band to the Transmit (Tx) frequency band in steps 120 and 122, transmits content to another external electronic device in steps 110 and 112, and switches the MAC layer and the PHY layer from the Tx frequency band back to the Rx frequency band in steps 121 and 123 as illustrated in FIG. 1. Such operations are continually repeated. However, this method decreases a maximum data throughput in each frequency band because of data throughput loss according to time division and time loss due to switching frequency bands. For example, to send content in 5 GHz band while the electronic device uses the Voice over Internet Protocol (VoIP) in 2.4 GHz, the transmission capacity in 5 GHz is limited and the switching of the MAC layer and the PHY layer between 2.4 GHz and 5 GHz causes time loss and delay. Thus, the concurrent service using the electronic device according to the conventional art is limited for the content transmission and reception that require real-time playback.

Therefore, a need exists for a system and method and apparatus for providing concurrent service.

The above information is presented as background information only to assist with an understanding of the present disclosure. No determination has been made, and no assertion is made, as to whether any of the above might be applicable as prior art with regard to the present invention.

US 2012/057536 relates to band wireless fidelity (WiFi). The method for supporting the multiband WIFI includes: assigning a category and a frequency band for traffic, based on one or more characteristics of the traffic; packetizing the traffic in a media access control (MAC) unit corresponding to the assigned frequency band; and transmitting the packetized traffic by using the assigned frequency band in a physical layer (PHY) unit corresponding to the assigned frequency band.

US 2012/020258 relates to a simultaneous operation of a short-ranged time division duplex (TDD) system with a mobile wireless broadband system may be implemented through scheduling and aligning both sets of communications. After determining a TDD frame configuration of the mobile wireless broadband system, a slot map is generated identifying slot-size selection information for each slot in the TDD frame configuration available for simultaneous operation. The slot-size selection information aligns the communication packet structure of the shortranged TDD system and the uplink/downlink boundary of the TDD frame configuration. The communication device then transmits the slot map to a short-ranged TDD device for establishing the simultaneous operation.

### SUMMARY OF THE INVENTION

Aspects of the present invention are to address the above-mentioned problems and/or disadvantages and to provide at least the advantages described below. Accordingly, an aspect of the present invention is to provide an apparatus and a method for providing a concurrent service in an electronic device.

Another aspect of the present invention is to provide an apparatus and a method for providing a concurrent service using a Media Access Control (MAC) layer and a PHYsical (PHY) layer which are functionally separate with respect to different frequency bands in an electronic device.

Another aspect of the present invention is to provide an apparatus and a method for receiving a signal using a first frequency band and concurrently sending a signal using a second frequency band in an electronic device.

According to one aspect of the present invention, an electronic device for providing a concurrent service includes a first communication unit for transceiving signals of a first frequency band, a second communication unit for transceiving signals of a second frequency band, an input unit for determining a function to execute for each of a plurality of counterpart devices, a memory for storing frequency band information corresponding to the function to execute, and a processor for determining the frequency bands for communicating with the counterpart devices based on frequency band information associated with the determined function, and controlling the first communication unit and the second communication unit to communicate with a corresponding counterpart device according to the determined frequency band.

According to another aspect of the present invention, a method for providing a concurrent service of an electronic device includes determining a function to execute for each of a plurality of counterpart devices, determining frequency bands for communicating with the counterpart devices based on frequency band information corresponding to the determined function among pre-stored frequency band information per function to execute, and transceiving, at a first communication unit and a second communication unit, signals with the corresponding counterpart devices at the same time according to the determined frequency band.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates signal transmission and reception in a time domain when a concurrent service is used in a electronic device according to the related art;
FIG. 2 illustrates an electronic device according to an exemplary embodiment of the present invention;
FIGs. 3A through 3D illustrate signal flows of the concurrent service in the electronic device according to exemplary embodiments of the present invention;
FIG. 4 illustrates signal transmission and reception in a time domain when a concurrent service is used in the electronic device according to an exemplary embodiment of the present invention;
FIG. 5 illustrates signal transmission and reception in the time domain when the concurrent service is used in the electronic device according to another exemplary embodiment of the present invention;
FIG. 6 illustrates an electronic device according to an exemplary embodiment of the present invention;
FIG. 7 illustrates a concurrent service method in an electronic device according to an exemplary embodiment of the present invention; and
FIG. 8 illustrates step 705 of FIG. 7 in detail according to an exemplary embodiment of the present invention.

Throughout the drawings, like reference numerals will be understood to refer to like parts, components and structures.

### DETAILED DESCRIPTION OF THE INVENTION

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the exemplary embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustrative purposes only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide a technique for providing a concurrent service using a Media Access Control (MAC) layer and a PHYsical (PHY) layer which are functionally separate with respect to different frequency bands in an electronic device.

The electronic device may include mobile communication terminals, smart phones, portable phones, tablet Personal Computers (PCs), Televisions (TVs), image forming devices (e.g., printers, multi-functional devices, and fax machines), and home appliances (e.g., refrigerators, air conditioners, and temperature controllers). Hereafter, the concurrent service using a wireless Local Area Network (LAN) communication system is operated in the electronic device by way of example, and exemplary embodiments of the present invention is equally applicable to the concurrent service using other communication systems.

The electronic device supports two different frequency bands (e.g., 2.4 GHz and 5 GHz), and two communication units support the respective frequency bands. Yet, when the electronic device supports a plurality of frequency bands, the instant disclosure is also applicable to a plurality of communication units that are physically separated to support the respective frequency bands.

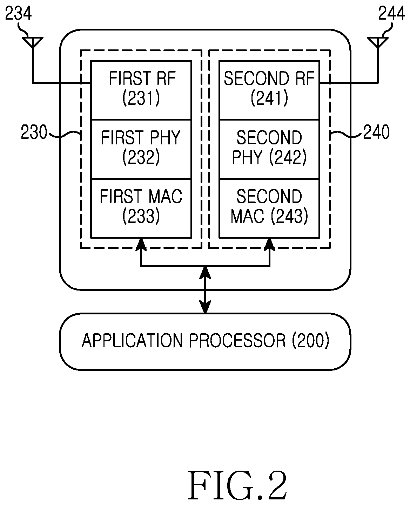

FIG. 2 is a simplified block diagram of an electronic device according to an exemplary embodiment of the present invention.

Referring to FIG. 2, the electronic device includes an application processor 200, a first band communication unit 230 for supporting a first frequency band, a second band communication unit 240 for supporting a second frequency band, a first antenna 234, and a second antenna 244.

When an event requiring concurrent service occurs, the application processor 200 independently operates the first band communication unit 230 and the second band communication unit 240 at the same time. That is, to support the concurrent service, the application processor 200 controls the first band communication unit 230 to send and receive content to and from a counterpart device (e.g., an Access Point (AP) or an electronic device) over the first frequency band and the second band communication unit 240 concurrently sends and receives content with another counterpart device over the second frequency band. For example, the application processor 200 transceives signals (i.e., transmits and receives signals) associated with a voice communication function (or Voice over Internet Protocol (VoIP)), a a Wireless Fidelity (Wi-Fi) Direct function, and a web browsing function through the first band communication unit 230, and concurrently transceives signals associated with a web browsing function, a wireless LAN display (or a Wi-Fi Display) function, and a Wi-Fi tethering function, through the second band communication unit 240., An example Wi-Fi Direct function allows the electronic device and a counterpart to directly communicate with each other without the AP, the web browsing function allows the electronic device to receive a signal from the AP and to display content from a source such as the Internet, and the wireless LAN display function to display the data transceived from another device using the wireless LAN.

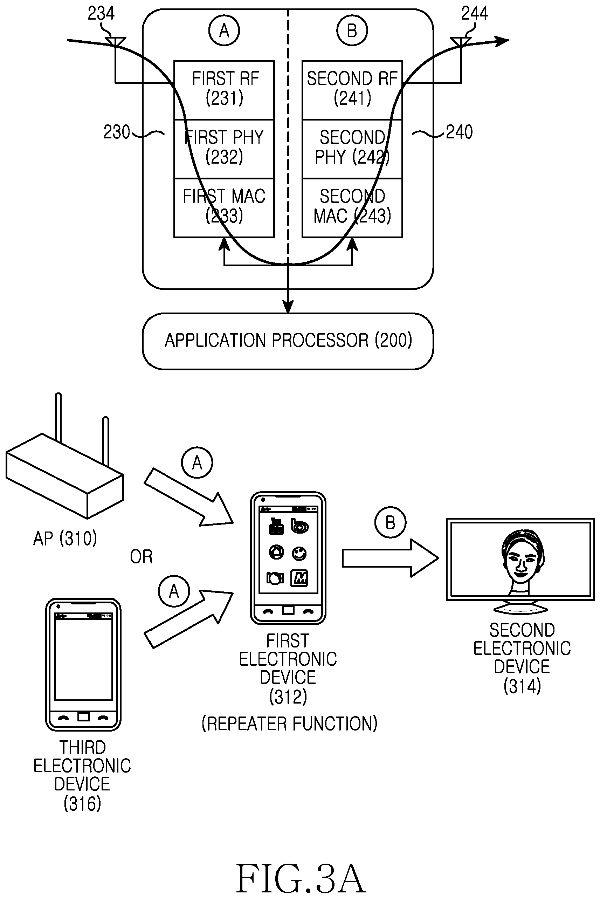

For example, a wireless LAN display may include a mirror mode and an extended mode. In the mirror mode, at least two electronic devices display the same image on their screen by transceiving signals using the wireless LAN. In the extended mode, the at least two electronic devices display different images on their screen by transceiving signals using the wireless LAN. Hereinafter, to ease the understanding, the mirror mode is referred to as a wireless LAN mirror display function, and the extended mode is referred to as a wireless LAN extended display function. The Wi-Fi tethering function allows the electronic device to function like an AP so that the counterpart device can send and retrieve content from a source such as the Internet. The operations of the electronic device for the functions shall be explained in more detail by referring to FIGs. 3A through 3D.

More particularly, in the concurrent mode, the application processor 200 determines the frequency bands to be used to transceive signals with the counterpart devices. For example, the application processor 200 can determine the first frequency band as the signal Trasmit/Receive (Tx/Rx) band for a first device (e.g., an AP or an electronic device), and determine the second frequency band as the signal Tx/Rx band for a second device (e.g., an AP or a second electronic device). In so doing, the application processor 200 may determine the signal Tx/Rx frequency bands of the devices based on preset bands per device, and determine the signal Tx/Rx frequency bands of the devices based on a function executed in the concurrent service. That is, in the concurrent service, the application processor 200 can determine the signal Tx/Rx bands for the counterpart devices by considering the frequency corresponding to the executed function or the frequency supported by each counterpart device. For example, when the function executed in the concurrent service is the web browsing function and the wireless LAN display (or Wi-Fi Display) function for the TV, the application processor 200 can determine the signal Rx band from the AP for the web browsing function and the signal Tx band to the TV for the wireless LAN display by considering the frequency bands supported by counterpart devices. For example, the application processor 200 can consider at least one of the frequency bands supported by the AP and the TV and the frequency bands supported by the web browsing function and the wireless LAN display function.

For example, in the concurrent service, when the AP is currently being accessed, the application processor 200 can determine the signal Tx/Rx bands for the AP or the electronic devices by considering the frequency band used for the AP access.

According to the frequency bands determined for the devices, the application processors 200 transceives signals through the first band communication unit 230 and transceives signals through the second band communication unit 240 at the same time. In so doing, based on the function executed in the concurrent service, the application processor 200 operates in a repeater mode or a dual mode. Herein, the application processor 200 determines which one of the repeater mode and the dual mode to operate in based on preset information that is pre-stored about operation modes for each execution function. For example, a storage device (not shown) can store information indicating that the operation mode corresponds to the repeater function is the repeater mode 300 and the dual mode 302 corresponds to the web browsing function, the wireless LAN mirror display function, the wireless LAN extended display function, and the Wi-Fi tethering function.

In the repeater mode, the application processor 200 forwards the signal from the first band communication unit 230 directly to the second band communication unit 240 without passing through the application processor 200, or forwards the signal from the second band communication unit 240 directly to the first band communication unit 230 without passing through the application processor 200. By contrast, in the dual mode, the application processor 200 either processes (e.g, resolution change, and data change or addition) the signal from the first band communication unit 230 and provides the processed signal or other signal to the second band communication unit 240, or additionally processes the signal from the second band communication unit 240 and provides the processed signal or other signal to the first band communication unit 230.

The first band communication unit 230 includes a first Radio Frequency (RF) unit 231, a first PHY layer 232, and a first MAC layer 233 for providing the signal in the first frequency band. The second band communication unit 240 includes a second RF unit 241, a second PHY layer 242, and a second MAC layer 243 for processing the signal in the second frequency band. The first band communication unit 230 and the second band communication unit 240 may be functionally separate on a single package and operate independent of each other. That is, the signal received from the first antenna 234 is processed by the first RF unit 231, the first PHY layer 232, and the first MAC layer 233 of the first band communication unit 230, and the transmit signal provided from the application processor 200 to the first band communication unit 230 is processed by the first MAC layer 233, the first PHY layer 232, and the first RF unit 231. The signal received from the second antenna 244 is processed by the second RF unit 241, the second PHY layer 242, and the second MAC layer 243 of the second band communication unit 240, and the transmit signal provided from the application processor 200 to the second band communication unit 240 is processed by the second MAC layer 243, the second PHY layer 242, and the second RF unit 241.

Hence, under the control of the application processor 200 and at the time the first band communication unit 230 sends and/or receives the signal, the second band communication unit 240 can also send and/or receive a signal. The frequency band supported by the first band communication unit 230 and the frequency band supported by the second band communication unit 240 are the discrete 2.4 GHz and 5 GHz band, respectively. Hence, the discrete frequencies can address interference between the Tx/Rx signals of the first band communication unit 230 and the Tx/Rx signals of the second band communication unit 240 to avoid RF performance degradation.

Herein, the first RF unit 231 and the second RF unit 241 each convert the RF signal to a baseband signal and output the baseband signal to the first PHY layer 232 and the second PHY layer 242, respectively, or convert a baseband signal from the first PHY layer 232 and the second PHY layer 242 to an RF signal and output the RF signal to the first antenna 234 an the second antenna 244, respectively. The RF units 231 and 241 can include devices associated with wireless communications such as an amplifier, a mixer, an oscillator, a Digital to Analog Converter (DAC), and a filter, for example.

The first PHY layer 232 and the second PHY layer 242 each can be implemented by a modulator/demodulator (modem) for converting the baseband signal and a bit sequence according to a physical layer standard of the wireless LAN communication system. For example, when the wireless LAN communication system conforms to Orthogonal Frequency Division Multiplexing (OFDM), the first PHY layer 232 and the second PHY layer 242 generate complex symbols by encoding and modulating a transmit bit sequence, map the generated complex symbols to subcarriers, and generates OFDM symbols by applying Inverse Fast Fourier Transform (IFFT) and inserting a Cyclic Prefix (CP) to transmit the data. When receiving data, the first PHY layer 232 and the second PHY layer 242 split the baseband signal to OFDM symbols, restore the signals mapped to the subcarriers using a Fast Fourier Transform (FFT), and restore the received bit sequence through demodulation and decoding.

The first MAC layer 233 and the second MAC layer 243 conduct various protocol algorithms for communication, and process access control protocol (or addressing) for network configuration, channel sharing protocol (or collision avoidance) such as Code Division Multiple Access (CDMA)/Collision Avoidance (CA) between multi-nodes, packet encryption, fragmentation, power save mode, and flow control.

As described above, the electronic device includes the first antenna 234 and the second antenna 244 to send and receive the signals over the separate antennas through the communication units 230 and 240. However, depending on the design, the electronic device may include a single antenna by applying a diplexer to a path of the first RF unit 231 and a path of the second RF unit 241.

FIGs. 3A through 3D illustrate signal flows of the concurrent service in the electronic device according to an exemplary embodiment of the present invention.

Referring to FIG. 3A, a first electronic device 312 operates in the repeater mode and forwards data from an AP 310 or a third electronic device 316 to a second electronic device 314.

As shown in FIG. 3A, when a user requests to execute the repeater function, the first electronic device 312 determines to operate in the repeater mode of the concurrent modes for supporting both of the first frequency band and the second frequency band. As such, the first electronic device 312 determines the signal Tx/Rx band of the AP 310 or the third electronic device 316 and determines the signal Tx/Rx band of the second electronic device 314 by taking into account frequencies supported by the counterpart devices 310, 314, and 316.

In this example, the first electronic device 312 receives data (or content) from the AP 310 or the third electronic device 316 through the first band communication unit 230 and forwards the received data to the second band communication unit 240 in real time. Thus, the first electronic device 312 receives the signal through the first band communication unit 230 and concurrently forwards the received signal to the second electronic device 314 through the second band communication unit 240. In so doing, the first electronic device 312 can extend a propagation distance of the wireless LAN signal by amplifying the signal received from the first band communication unit 230 using the second band communication unit 240. Since the data received from the AP 310 is sent to the second electronic device 314 without passing through the application processor 200, a delay time until the received data is transmitted is minimized.

While the first electronic device 312 receives the signal from the AP 310 and transmits the signal to the second electronic device 314, the first electronic device 312 may receive the signal from the second electronic device 314 and concurrently transmit the signal to the AP 310.

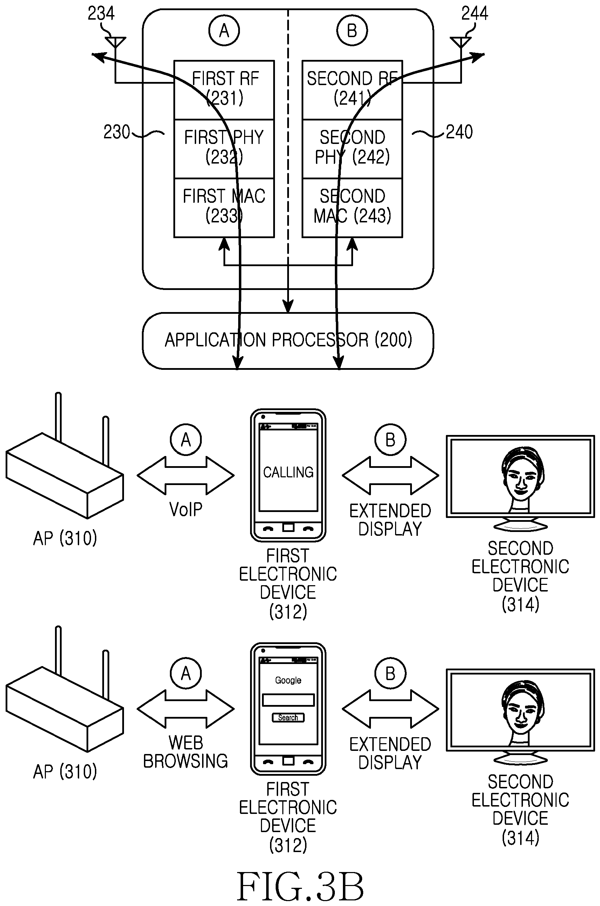

Referring to FIG. 3B, the first electronic device 312 in the dual mode receives data from the AP 310 and concurrently transmits separate data different from the received data to the second electronic device 314.

As shown in FIG. 3B, when the user requests the voice call connection function and the wireless LAN display function or requests the web browsing function and the extended display function, the first electronic device 312 determines to operate in the dual mode of the concurrent modes to support the first frequency band and the second frequency band. Herein, the second electronic device 314 determines the first frequency band as the signal Tx/Rx band for the AP 310 and determines the second frequency band as the signal Tx/Rx band for the second electronic device 314 by taking into account the frequencies supported by the counterpart devices 310 and 314.

In this example, when both of the voice call connection function and the wireless LAN display function are requested, the first electronic device 312 can receive data for a voice call from the AP 310 through the first band communication unit 230 and forward the data to the user, and send user's voice data to the AP 310 through the first band communication unit 230. At the same time, the first electronic device 312 transmits pre-stored content to the second electronic device 314 through the second band communication unit 240.

When both of the web browsing function and the extended display function are requested, the first electronic device 312 can receive a signal for the web browsing function from the AP 310 through the first band communication unit 230 and provide an Internet screen to the user, and can send an Internet control signal generated by the user's control to the AP 310 through the first band communication unit 230. Simultaneously, the first electronic device 312 transmits the pre-stored content to the second electronic device 314 through the second band communication unit 240. In this example, the counterpart device for receiving the web browsing signal may be an electronic device connected using the Wi-Fi Direct function rather than the AP 310.

That is, the first electronic device 312 supports different frequency bands and uses both of the first band communication unit 230 and the second band communication unit 240 to operate the different frequency bands independently. Thus, the first electronic device 312 can perform the voice call function or the web browsing function and concurrently transmit the content to the second electronic device 314 by accessing the AP 310.

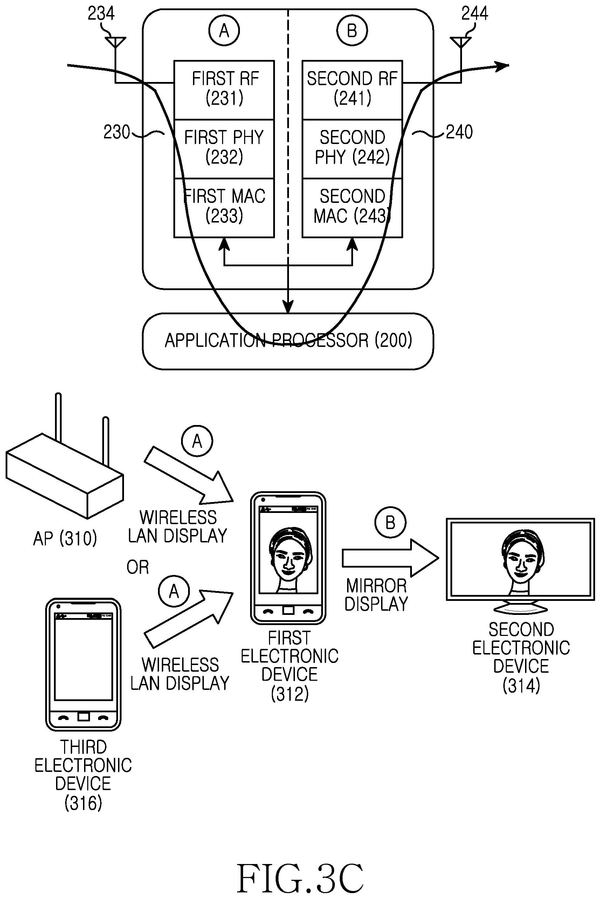

FIG. 3C illustrates the first electronic device 312 in the dual mode receives data from the AP 310 or the third electronic device 316 and concurrently transmits the received data to the second electronic device 314.

As illustrated in FIG. 3C, when the user requests both of the wireless LAN display function and the mirror display function at the same time, the first electronic device 312 determines to operate in the dual mode of the concurrent modes. The first electronic device 312 determines the first frequency band as the signal Tx/Rx band for the AP 310 or the third electronic device 316 and also determines the second frequency band as the signal Tx/Rx band for the second electronic device 314 by taking into account the frequencies supported by the counterpart devices 310, 314 and 316.

The first electronic device 312 can receive data (e.g., media content) for the wireless LAN display from the AP 310 or the third electronic device 316 through the first band communication unit 230 and display the data to the user. Concurrently, the first electronic device 312 forwards the received data to the second electronic device 314 through the second band communication unit 240. That is, for the mirror display function for displaying the same data on the screens of the first electronic device 312 and the second electronic device 314, the first electronic device 312 sends the data received from the first band communication unit 230 to the second electronic device 314 through the second band communication unit 240 in real time. Thus, the first electronic device 312 uses the first band communication unit 230 and the second band communication unit 240 that are independently operable by supporting the different frequency bands. Thus, the first electronic device 312 can display the data on its screen and control the second electronic device 314 to display the same data at the same time.

In so doing, the data received through the first band communication unit 230 may be additionally processed (e.g., a resolution change) by the application processor 200 and then transmitted to the second band communication unit 240, or may be fed to the application processor 200 but transmitted through the second band communication unit 240 without separate additional processing.

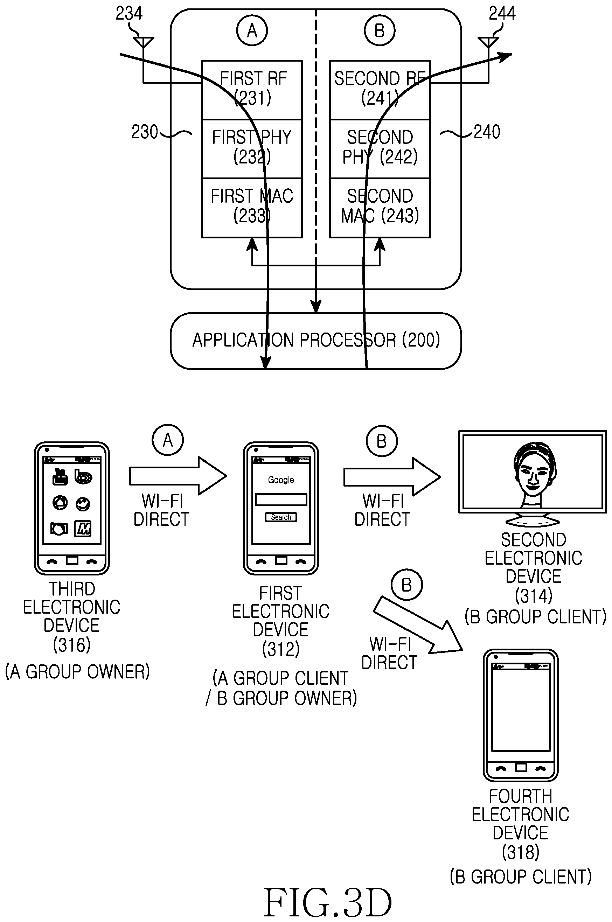

FIG. 3D illustrates that the first electronic device 312 in the dual mode receives data from the third electronic device 316 and concurrently transmits the received data to the second electronic device 314 and a fourth electronic device 318.

As illustrated in FIG. 3D, when the user requests both of the Wi-Fi Direct function with the third electronic device 316 and the Wi-Fi Direct function with the second and fourth electronic devices 314 and 318, the first electronic device 312 determines to operate in the dual mode of the concurrent modes. The first electronic device 312 determines the first frequency band as the signal Tx/Rx band for the third electronic device 316 and determines the second frequency band as the signal Tx/Rx band for the second and fourth electronic devices 314 and 318 by taking into account the frequencies supported by the counterpart devices 314, 316 and 318.

The first electronic device 312 can serve as a group client by connecting to the third electronic device 316 through the first band communication unit 230 based on the Wi-Fi Direct function and serve as a group owner by connecting to the second and fourth electronic devices 314 and 318 through the second band communication unit 240 based on the Wi-Fi Direct function. In so doing, the first electronic device 312 can receive data (e.g., media content) from the third electronic device 316 through the first band communication unit 230, and concurrently transmits the received data to the second and fourth electronic devices 314 and 318 through the second band communication unit 240. In so doing, the first electronic device 312 may display the data (e.g., the media content) received from the third electronic device 316 to the user via the application processor 200, may additionally process the data (e.g., the resolution change, and the data change or addition) in the application processor 200 and then transmit the data through the second band communication unit 240. In another example, the first electronic device 312 may transmit the data through the second band communication unit 240 without additional processing. The first electronic device 312 can send other data (e.g., media content stored in the first electronic device 312) and not the data received from the third electronic device 316, to the second and fourth electronic devices 314 and 318 through the second band communication unit 240.

As described above, the electronic device supports different frequency bands and includes the two communication units 230 and 240 that are functionally separate and independently operated. Thus, the electronic device can receive the signal through first band communication unit 230 and concurrently transmit the signal through the second band communication unit 240.

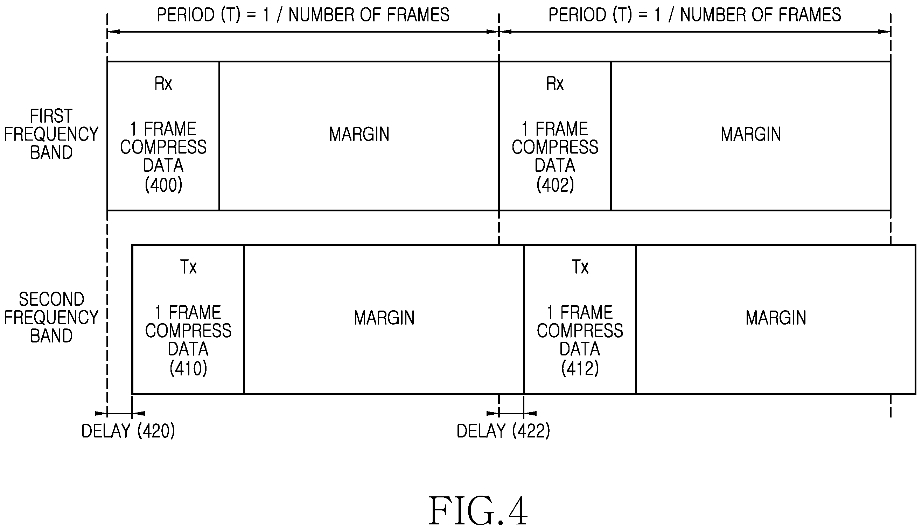

FIG. 4 illustrates signal transmission and reception in a time domain when a concurrent service is used in the electronic device.

Referring to FIG. 4, the electronic device does include a delay time to switch between signal reception and transmission, and can receive signals over the first frequency band in steps 400 and 402 and concurrently transmit a signal over the second frequency band in step 410 as shown in FIG. 4. In FIG. 4, the delays 420 and 422 between the Tx time and the Rx time are caused because it is necessary to receive the signal before the signal is transmitted when the electronic device in the repeater mode or the dual mode forwards the received signal from the counterpart to other device. However, the delay time is much shorter than the delay times generated in an device that receives the signal using one MAC layer and one PHY layer and then transmits the signal by switching the frequency support band of the MAC layer and the PHY layer. Thus, the delay time in the repeater mode includes a frequency conversion time and the delay time in the dual mode includes a frequency conversion time, a decoding time, and an encoding time.

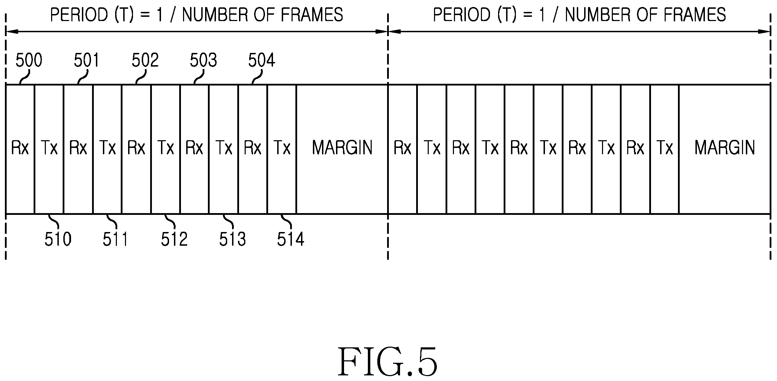

FIG. 5 illustrates signal transmission and reception in the time domain when the concurrent service is used in the electronic device.

Referring to FIG. 5, when a single host interface communicates between the application processor 200 and the communication units 230 and 240, the application processor 200 needs to transceive signals alternately with the first band communication unit 230 and the second band communication unit 240. In this case, the first band communication unit 230 and the second band communication unit 240 can fragment the frame into a plurality of packets under the control of the application processor 200, and the application processor 200 can transceive signals with the first band communication unit 230 and the second band communication unit 240 in turn based on the fragmented packet data. Accordingly, in the electronic device according to another exemplary embodiment of the present invention, an application processor 200 can alternately process Rx packets 500 through 504 and Tx packets 510 through 514 as illustrated in FIG. 5. The alternate input and output of the Tx signal and the Rx signal on the packet basis in the application processor 200 is effective in the real-time playback due to the shorter delay time as compared to the conventional electronic device which receives the signal on the frame basis, switches the MAC layer and the PHY layer frequency band, transmits the received signal on the frame basis, and then re-switches the MAC layer and the PHY layer frequency band as described above.

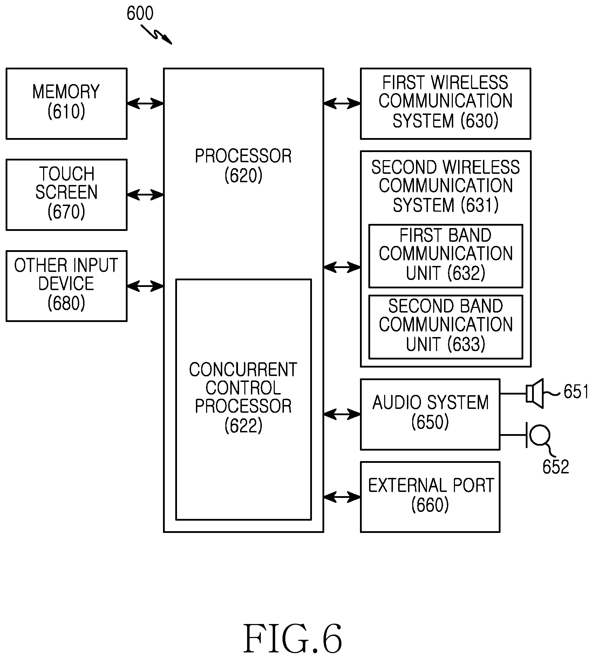

FIG. 6 is a detailed block diagram of the electronic device according to an exemplary embodiment of the present invention.

Referring to FIG. 6, an electronic device 600 includes a memory 610, a processor 620, a first wireless communication system 630, a second wireless communication system 631, an audio system 650, a speaker 651, a microphone 652, an external port 660, a touch screen 670, and an other input device 680.

The processor 620 controls and processes the operations of the electronic device 600. The processor 620 can process the operations of the electronic device 600 by running various software programs. In addition, the processor 620 includes a concurrent control processor 622 to independently operate a first band communication unit 632 and a second band communication unit 633 for supporting the second wireless communication system 631 at the same time when an event for supporting the concurrent service occurs. That is, to support the concurrent service, the concurrent control processor 622 transceives content with a first counterpart device (e.g., an AP or an electronic device) via the first band communication unit 632 supporting a first frequency band and concurrently transceives content with another counterpart device via the second band communication unit 633 supporting a second frequency band. That is, the concurrent control processor 622 functions as the application processor 200 as illustrated in FIGs. 2 and 3.

The concurrent control processor 622 communicates with other devices such as a base station, an AP, a server, a computer, a tablet PC, an image forming device, home appliances, and/or a mobile terminal through the first and second wireless communication systems 630 and 631 or the external port 660. In particular, the concurrent control processor 622 can determine the functions requested for the counterpart devices by detecting the user input via the touch screen 670, and determine whether to support the concurrent service according to the requested function. The concurrent control processor 622 can determine the concurrent service support, the operation mode, and the signal Tx/Rx band of the counterpart based on information pre-stored in the memory 610 such as, for example, information relating to whether the concurrent service is required per executed function, operation modes corresponding to the executed functions, and frequency support information. When a function is being executed, the concurrent control processor 622 can determine the signal Tx/Rx band for the other counterpart device by considering the frequency band being used by the currently executed function. The concurrent control processor 622 may determine the signal Tx/Rx band for each counterpart device based on the frequency bands supported by the counterpart devices. When the frequency band information supported by the counterpart is not pre-stored in the memory 610, the concurrent control processor 622 may obtain the information of the frequency band supported by the counterpart device.

The concurrent control processor 622 controls the first band communication unit 632 and the second band communication unit 633 according to the signal Tx/Rx band determined for the counterpart device, and thus transceives signals with the counterpart device through one of the first band communication unit 632 and the second band communication unit 633 and concurrently transceives signals with another counterpart device through the remaining communication unit. In so doing, based on if the operation mode is the repeater mode or the dual mode, the concurrent control processor 622 controls the signal paths of the first band communication unit 632 and the second band communication unit 633. That is, when the operation mode is the repeater mode, the concurrent control processor 622 forwards the signal from the first band communication unit 632 directly to the second band communication unit 633 without passing the signal through the processor 620. By contrast, when the operation mode is the dual mode, the concurrent control processor 622 additionally processes the signal from the first band communication unit 632 in the processor 620 and provides the processed signal or other signal to the second band communication unit 633. When the single host interface communicates with the first and second band communication units 632 and 633, the concurrent control processor 622 controls the first band communication unit 632 and the second band communication unit 633 to fragment the frame into a plurality of packets and to transceive signals with the first band communication unit 632 and the second band communication unit 633 based on the fragmented packet data.

The first wireless communication system 630 and the second wireless communication system 631 send and receive signals to and from external devices. The first wireless communication system 630 can include a radio frequency transceiver and/or an optical (e.g., infrared) transceiver. For example, the first wireless communication system 630 can support any one of a Global System for Mobile Communication (GSM) network, an Enhanced Data GSM Environment (EDGE) network, a Code Division Multiple Access (CDMA) network, a Wideband-CDMA (WCDMA) network, a Long Term Evolution (LTE) network, an Orthogonal Frequency Division Multiple Access (OFDMA) network, and a Bluetooth® network.

The second wireless communication system 631 supports the wireless LAN communication system and includes the first band communication unit 632 and the second band communication unit 633, which are functionally separate, and transceive signals of different frequency bands through the communication units 632 and 633. For example, the first band communication unit 632 and the second band communication unit 633 support 2.4 GHz and 5 GHz, respectively, and may support different frequency bands according to their respective design. The first band communication unit 632 and the second band communication unit 633 each include a corresponding RF unit, a PHY layer, and a MAC layer. Thus, the second wireless communication system 631 can simultaneously transceive signals independently for two different frequency bands. In so doing, since the frequency band supported by the first band communication unit 632 is different from the frequency band supported by the second band communication unit 633, the discrete frequency bands can address interference between the signals of the frequency bands and the RF performance degradation can be avoided. Herein, the first band communication unit 632 and the second band communication unit 633 correspond to the first band communication unit 230 and the second band communication unit 240 illustrated in the example of FIG. 2 and provide the same functions as the first band communication unit 230 and the second band communication unit 240.

The audio system 650 inputs and outputs audio streams for voice recognition, voice reproduction, digital recording, and telephone function in association with the speaker 651 and the microphone 652. That is, the audio system 650 outputs an audio signal through the speaker 651 and receives an audio signal through the microphone 652. The audio system 650 receives a data stream from the processor 620, converts the received data stream to an electric signal, and outputs the electric signal to the speaker 651. The audio system 650 receives an electric signal from the microphone 652, converts the electric signal to an audio data stream, and provides the audio data stream to the processor 620. The audio system 650 may also output an audio signal to another port for reproduction of the audio for the user.

The speaker 651 converts the electric signal received from the audio system 650 to sound saves audible to a human. The microphone 652 converts sound waves from a person or other sound sources into an electrical signal.

The external port 660 can be used to connect the electric device to another electronic device directly or indirectly via the network. The external port 660 indicates, for example, a Universal Serial Bus (USB) port or a Firewire™ port.

The touch screen 670 is an input/output interface between the electronic device 600 and the user and provides the interface for the user's touch input/output. In detail, the touch screen 670 detects the user's touch input to the electronic device 600 and displays the output from the electronic device 600 for the user. The touch screen 670 provides a visual output including text, graphic, video, and any suitable combination. The touch screen 670 can be implemented, but not limited to, various display techniques such as Liquid Crystal Display (LCD), Light Emitting Diode (LED), Light emitting Polymer Display (LPD), Organic LED (OLED), Active Matrix OLED (AMOLED), or Flexible LED (FLED), for example. The touch screen 670 can detect the user's input requesting to execute a particular function. For example, the touch screen 670 can detect the user input for turning the repeater function on or off and the user input requesting to execute the wireless LAN mirror display function, the wireless LAN extended display function, the wireless LAN web browsing function, and the Wi-Fi tethering function.

The other input device 680 can include up/down buttons for controlling one or more volumes or other input. The button can use a push button or a rocker button. The other input device 680 can employ a rocker switch, a thumb-wheel, a dial, a stick, and/or a pointer device such as stylus.

The memory 610 contains various programs and data for the processor 620 and may include a plurality of memories for operation of the electronic device 600. The memory 610 can include one or more rapid random access memories such a magnetic disc storage medium and/or non-volatile memories, one or more optical storage mediums, and/or one or more solid state memory mediums (e.g., NAND and NOR flash). The memory 610 can store one or more modules containing instructions. For example, the memory 610 can include at least one instruction to execute the functions of the concurrent control processor 622.

The memory 610 includes applications for the repeater function, the voice communication function using the wireless LAN, the wireless LAN mirror display function, the wireless LAN extended display function, the wireless LAN web browsing function, and the Wi-Fi tethering function. Herein, the repeater function forwards the content received from a counterpart device to another electronic device in real time without displaying the content on the electronic device 600.

The memory 610 stores the preset information associated with the operation modes per executed function. For example, the memory 610 can pre-store the information indicating that the repeater mode corresponds to the repeater function and the dual mode corresponds to the web browsing function, the wireless LAN mirror display function, the wireless LAN extended display function, and the Wi-Fi tethering function. Herein, the pre-stored information of the operation modes per executed function can be stored in the design phase and updated by another electronic device or by the user. The memory 610 stores information indicating whether the concurrent service per function is required in the event that two or more counterpart devices are using the wireless LAN in different frequency bands. For example, the memory 610 can store the information indicating that the concurrent service is needed when the repeater function and the Wi-Fi tethering function are concurrently executed, and the information indicating the concurrent service is needed when at least two of the voice communication using the wireless LAN, the wireless LAN mirror display function, the wireless LAN extended display function, and the web browsing using the wireless LAN are performed at the same time.

The memory 610 stores preset information corresponding to the frequency support information per function. For example, the memory 610 can store information indicating that the voice communication function and the web browsing function using the wireless LAN support both the first frequency band and the second frequency band, and the wireless LAN mirror display function and the wireless LAN extended display function support the second frequency band.

The memory 610 stores the frequency support information of the counterpart device that has been connected before.

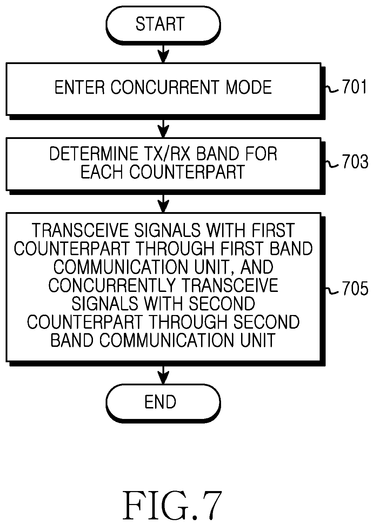

FIG. 7 illustrates a concurrent service method in the electronic device according to an exemplary embodiment of the present invention.

Referring to FIG. 7, the electronic device detects an event requiring the concurrent service and enters the concurrent mode in step 701. Accordingly, the electronic device can detect the function requested for the counterpart devices according to the user control and determines whether the event requires the concurrent service support based on the requested function. Herein, the electronic device needs to pre-store the information about whether to support the concurrent service per function. With respect to the plurality of the counterpart devices, when either the repeater function or the wireless LAN tethering function is executed or when two of the wireless LAN voice communication function, the wireless LAN web browsing function, the wireless LAN mirror display function, and the wireless LAN extended display function are executed, the electronic device detects that the concurrent service is required and enters the concurrent mode accordingly.

In step 703, the electronic device determines the signal Tx/Rx band for each counterpart device based on the supported frequency bands. In so doing, the electronic device can determine the signal Tx/Rx band for each counterpart device in a preset manner. For example, the electronic device can be preset to use the first frequency band for the AP and to use the second frequency band for the TV and determines the signal Tx/Rx band for each counterpart device in the preset manner. The electronic device can determine the signal Tx/Rx band for each counterpart device by considering the frequency band supported by the executed function and the frequency bands supported by the counterpart devices. For example, the wireless LAN web browsing function using the AP and the wireless LAN extended display function for the TV are requested in the electronic device, the web browsing function supports both of the first and second frequency bands, the extended display function supports only the second frequency band, and the AP and the TV support both the first and second frequency bands. Accordingly, the electronic device can determine the first frequency band as the signal Tx/Rx band for the AP and determine the second frequency band as the signal Tx/Rx band for the TV.

Thus, when the first frequency band is determined for the first counterpart device and the second frequency band is determined for the second counterpart device, the electronic device transceives signals with the first counterpart (e.g., the AP or the electronic device) through the first band communication unit and concurrently transceives signals with the second counterpart (e.g., the AP or the electronic device) through the second band communication unit in step 705.

Next, the electronic device finishes this process until a frequency band needs to be reselected based on requested service.

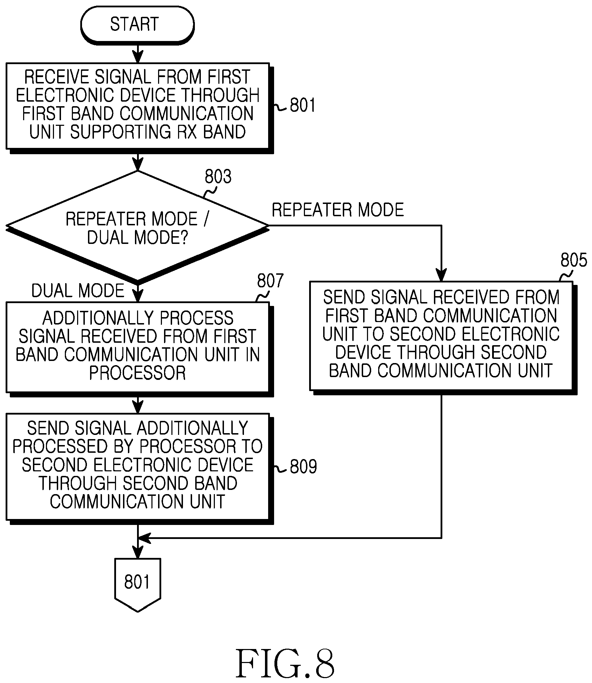

FIG. 8 illustrates the step 705 in more detail in the electronic device according to an exemplary embodiment of the present invention. Herein, the electronic device receives the signal from the first counterpart device and sends the signal to the second counterpart device.

Referring to FIG. 8, the electronic device receives the signal from the first counterpart (e.g., the AP or the electronic device) through the first band communication unit which supports the signal Rx band in step 801.

In step 803, the electronic device determines whether its current operation mode is the repeater mode or the dual mode. Thus, the operation mode of the electronic device can be determined when it enters the concurrent mode at step 701 or when the signal Tx/Rx band is determined at step 703 of FIG. 7. In other words, the electronic device can determine whether its operation mode is repeater mode or the dual mode before receiving the signal in step 705.Accordingly, the electronic device can pre-store the information of the operation modes per function and determine the operation mode according to the function requested by the user control. For example, when the repeater function is requested, the electronic device can determine the repeater mode as the operation mode. When the wireless LAN mirror display function or the extended display function is requested together with the web browsing function, the electronic device can determine the dual mode as the operation mode.

When the operation mode is the repeater mode, the electronic device receives the signal through the first band communication unit and concurrently sends the signal to the second electronic device through the second band communication unit by forwarding the signal received through the first band communication unit directly to the second band communication unit without additional processing in step 805. The signal transmitted from the electronic device to the second electronic device can be amplified by the second band communication unit. Next, the electronic device goes back to step 801 and sends the signal received from the first electronic device to the second electronic device in real time.

By contrast, when the operation mode is the dual mode, the electronic device additionally processes the signal received through the first band communication unit in the processor in step 807 and sends the processed signal to the second electronic device through the second band communication unit in step 809. That is, the electronic device can receive the signal through the first band communication unit and concurrently transmit the processed signal through the second band communication unit in steps 807 and 809. Next, the electronic device goes back to step 801 to process the signal received from the first electronic device to concurrently transmit the signal to the second electronic device. For example, when the wireless LAN extended display function is requested together with the web browsing function, the electronic device can receive and display the web content on the screen and concurrently transmit the stored media content to the second electronic device 314 as illustrated in FIG. 3A.

The present electronic device, which includes the physically separated MAC layer and PHY layer for the different frequency bands (e.g., 2.4 GHz and 5 GHz), can receive the signal in the first frequency band and concurrently send the signal in the second frequency band. Hence, the electronic device supporting the concurrent service prevents the time loss caused by the frequency band switching, efficiently transcieves data requiring the real-time playback, overcomes the limited data throughput in each frequency band, and transcieves data without time delay caused by the limited data throughput.

While the invention has been shown and described with reference to certain exemplary embodiments thereof, it will be understood by those skilled in the art that various changes in form and details may be made therein without departing from the scope of the invention as defined by the appended claims.

## Claims

1. An electronic device for providing a concurrent service, the device comprising:
a first communication unit (632) for transceiving signals in a first frequency band;
a second communication unit (633) for transceiving signals in a second frequency band;
an input unit (680) for receiving user input;
a memory (610) for storing information about a plurality operation modes;
a processor (620) for determining, based on the user input, a function to execute for each of at least two counterpart devices, determining, based on the stored information about the plurality operation modes, an operation mode corresponding to the determined function to execute for each of at least two counterpart devices, determining different frequency bands for the at least two counterpart devices based on the determined function for each of at least two counterpart devices and the at least two counterpart devices, and controlling the first communication unit and the second communication unit to concurrently communicate, based on the determined different frequency bands, with the at least two counterpart devices according to the determined operation mode,
wherein the plurality operation modes comprises a repeater mode that forwards a signal received through the first communication unit directly to the second communication unit without passing through the processor, and a dual mode that forwards the signal received through the first communication unit to the processor and concurrently sends a signal from the processor to the second communication unit.

2. The electronic device of claim 1, wherein the first communication unit and the second communication unit each comprise a Radio Frequency, RF, unit, a PHYsical, PHY, layer, and a Media Access Control, MAC, layer, and
wherein the first communication unit and the second communication unit are functionally separated.

3. The electronic device of claim 1, wherein, when the operation mode is the dual mode, the processor transceives signals with the first communication unit through a first host interface and concurrently transceives signals with the second communication unit through a second host interface.

4. The electronic device of claim 1, wherein, when the operation mode is the dual mode, the processor transceives fragmented packets with the first communication unit and the second communication unit in turn through a first host interface.

5. The electronic device of claim 1,
wherein, when determining the different frequency bands to communicate with the at least two counterpart devices, the processor determines the different frequency bands for the at least two counterpart devices based on first frequency band information corresponding to the determined function and second frequency band information for the at least two counterpart devices.

6. A method for providing a concurrent service of an electronic device, the method comprising:
determining, based on user input, a function to execute for each of at least two counterpart devices;
determining, based on pre-stored information about a plurality operation modes, an operation mode corresponding to the determined function to execute for each of at least two counterpart devices;
determining different frequency bands for the at least two counterpart devices based on the determined function for each of at least two counterpart devices and the at least two counterpart devices; and
transceiving, at a first communication unit and a second communication unit that use the determined different frequency bands, signals with the at least two counterpart devices at the same time according to the determined operation mode,
wherein the plurality operation modes comprises a repeater mode that forwards a signal received through the first communication unit directly to the second communication unit without passing through the processor, and a dual mode that forwards the signal received through the first communication unit to the processor and concurrently sends a signal from the processor to the second communication unit.

7. The method of claim 6, wherein the first communication unit and the second communication unit each comprise a Radio Frequency, RF, unit, a PHYsical, PHY, layer, and a Media Access Control, MAC, layer, and
wherein the first communication unit and the second communication unit are functionally separated.

8. The method of claim 6, wherein, when the operation mode is the dual mode, the transceiving of the signals with the at least two counterpart devices comprises:
transceiving signals between the first communication unit and a processor of the electronic device through a first host interface, and concurrently transceiving signals between the second communication unit and the processor through a second host interface.

9. The method of claim 6, wherein, when the operation mode is the dual mode, the transceiving of the signals with the at least two counterpart devices comprises:
transceiving, at a processor of the electronic device, fragmented packets with the first communication unit and the second communication unit in turn through a first host interface.

10. The method of claim 6, wherein the determining of the different frequency bands for the at least two counterpart devices comprises:
determining the different frequency bands for the at least two counterpart devices based on first frequency band information corresponding to the determined function and second frequency band information for the at least two counterpart devices.

## Patentansprüche

1. Elektronische Vorrichtung zur Bereitstellung eines simultanen Dienstes, mit:
einer ersten Kommunikationseinheit (632) zum Austausch von Signalen in einem ersten Frequenzband;
einer zweiten Kommunikationseinheit (633) zum Austausch von Signalen in einem zweiten Frequenzband;
einer Eingabeeinheit (680) zum Empfang von Benutzereingaben;
einem Speicher (610) zum Speichern von Informationen über eine Vielzahl von Betriebsarten;
einem Prozessor (620) zur Ermittlung, basierend auf der Benutzereingabe, einer Funktion, die für jede von mindestens zwei Gegenstückvorrichtungen auszuführen ist, mit Ermittlung, basierend auf den gespeicherten Informationen über die Vielzahl von Betriebsarten, eines Betriebsmodus, der der ermittelten Funktion entspricht, die für jede von mindestens zwei Gegenstückvorrichtungen auszuführen ist,
mit Ermittlung verschiedener Frequenzbänder für die mindestens zwei Gegenstückvorrichtungen, basierend auf der ermittelten Funktion für jede von mindestens zwei Gegenstückvorrichtungen und die mindestens zwei Gegenstückvorrichtungen, und Steuerung der ersten Kommunikationseinheit und der zweiten Kommunikationseinheit, damit sie simultan kommunizieren, basierend auf den ermittelten verschiedenen Frequenzbändern, mit den mindestens zwei Gegenstückvorrichtungen, entsprechend dem ermittelten Betriebsmodus,
wobei die Vielzahl von Betriebsarten einen Repeater-Modus umfasst, der ein Signal, das durch die erste Kommunikationseinheit empfangen wurde, direkt an die zweite Kommunikationseinheit weiterleitet, ohne den Prozessor zu passieren, und einen dualen Modus, der das Signal, das durch die erste Kommunikationseinheit empfangen wurde, an den Prozessor weiterleitet und gleichzeitig ein Signal von dem Prozessor an die zweite Kommunikationseinheit sendet.

2. Elektronische Vorrichtung nach Anspruch 1, wobei die erste Kommunikationseinheit und die zweite Kommunikationseinheit je eine Funkfrequenz (RF)-Einheit umfassen, eine physikalische, PHY, Schicht, und eine Medienzugangssteuerungs-, MAC, -Schicht, und wobei die erste Kommunikationseinheit und die zweite Kommunikationseinheit funktionell getrennt sind.

3. Elektronische Vorrichtung nach Anspruch 1, wobei, wenn der Betriebsmodus der duale Modus ist, der Prozessor Signale mit der ersten Kommunikationseinheit durch eine erste Hostschnittstelle austauscht und gleichzeitig Signale mit der zweiten Kommunikationseinheit durch eine zweite Hostschnittstelle austauscht.

4. Elektronische Vorrichtung nach Anspruch 1, wobei, wenn der Betriebsmodus der duale Modus ist, der Prozessor fragmentierte Pakete mit der ersten Kommunikationseinheit und der zweiten Kommunikationseinheit abwechselnd über eine erste Hostschnittstelle austauscht.

5. Elektronische Vorrichtung nach Anspruch 1,
wobei, bei der Ermittlung der verschiedenen Frequenzbänder, um mit den mindestens zwei Gegenstückvorrichtungen zu kommunizieren, der Prozessor die verschiedenen Frequenzbänder für die mindestens zwei Gegenstückvorrichtungen basierend auf ersten Frequenzband-Informationen bestimmt, die der ermittelten Funktion entsprechen, und zweiten Frequenzband-Informationen für die mindestens zwei Gegenstückvorrichtungen.

6. Verfahren zur Bereitstellung eines simultanen Dienstes einer elektronischen Vorrichtung, wobei das Verfahren Folgendes umfasst:
Ermittlung, basierend auf Benutzereingaben, einer Funktion, die für jede von mindestens zwei Gegenstückvorrichtungen auszuführen ist;
Ermittlung, basierend auf vorher gespeicherten Informationen über eine Vielzahl von Betriebsarten, eines Betriebsmodus, der der ermittelten Funktion entspricht und für jede von mindestens zwei Gegenstückvorrichtungen auszuführen ist;
Ermittlung verschiedener Frequenzbänder für die mindestens zwei Gegenstückvorrichtungen, basierend auf der ermittelten Funktion für jede von mindestens zwei Gegenstückvorrichtungen und die mindestens zwei Gegenstückvorrichtungen; und
Austausch, bei einer ersten Kommunikationseinheit und einer zweiten Kommunikationseinheit, die die ermittelten verschiedenen Frequenzbänder verwenden, von Signalen mit den mindestens zwei Gegenstückvorrichtungen zur selben Zeit, entsprechend dem ermittelten Betriebsmodus,
wobei die Vielzahl von Betriebsarten einen Repeater-Modus umfasst, der ein Signal, das durch die erste Kommunikationseinheit empfangen wird, direkt an die zweite Kommunikationseinheit weiterleitet, ohne den Prozessor zu passieren, und einen dualen Modus, der das Signal, das durch die erste Kommunikationseinheit empfangen wurde, an den Prozessor weiterleitet und gleichzeitig ein Signal von dem Prozessor an die zweite Kommunikationseinheit sendet.

7. Verfahren nach Anspruch 6, wobei die erste Kommunikationseinheit und die zweite Kommunikationseinheit je eine Funkfrequenz (RF)-Einheit umfassen, eine physikalische, PHY, Schicht, und eine Medienzugangssteuerungs-, MAC, -Schicht, und
wobei die erste Kommunikationseinheit und die zweite Kommunikationseinheit funktionell getrennt sind.

8. Verfahren nach Anspruch 6, wobei, wenn der Betriebsmodus der duale Modus ist, der Austausch der Signale mit den mindestens zwei Gegenstückvorrichtungen Folgendes umfasst:
Austausch von Signalen zwischen der ersten Kommunikationseinheit und einem Prozessor der elektronischen Vorrichtung durch eine erste Hostschnittstelle, und gleichzeitig Austausch von Signalen zwischen der zweiten Kommunikationseinheit und dem Prozessor durch eine zweite Hostschnittstelle.

9. Verfahren nach Anspruch 6, wobei, wenn der Betriebsmodus der duale Modus ist, der Austausch der Signale mit den mindestens zwei Gegenstückvorrichtungen Folgendes umfasst:
Austausch, bei einem Prozessor der elektronischen Vorrichtung, von fragmentierten Paketen mit der ersten Kommunikationseinheit und der zweiten Kommunikationseinheit abwechselnd durch eine erste Hostschnittstelle.

10. Verfahren nach Anspruch 6, wobei die Ermittlung der verschiedenen Frequenzbänder für die mindestens zwei Gegenstückvorrichtungen Folgendes umfasst:
Ermittlung der verschiedenen Frequenzbänder für die mindestens zwei Gegenstückvorrichtungen basierend auf ersten Frequenzband-Informationen, die der ermittelten Funktion entsprechen, und zweiten Frequenzband-Informationen für die mindestens zwei Gegenstückvorrichtungen.

## Revendications

1. Dispositif électronique pour fournir un service simultané, le dispositif comprenant :
une première unité de communication (632) pour émettre / recevoir des signaux dans une première bande de fréquences ;
une deuxième unité de communication (633) pour émettre / recevoir des signaux dans une deuxième bande de fréquences ;
une unité d'entrée (680) pour recevoir des entrées d'utilisateur ;
une mémoire (610) pour stocker des informations sur une pluralité de modes de fonctionnement ;
un processeur (620) pour déterminer, sur la base des entrées d'utilisateur, une fonction à être exécutée pour chacun d'au moins deux dispositifs homologues, pour déterminer, sur la base des informations stockées concernant la pluralité de modes de fonctionnement, un mode de fonctionnement correspondant à la fonction déterminée à être exécutée pour chacun d'au moins deux dispositifs homologues, pour déterminer des bandes de fréquences différentes pour les au moins deux dispositifs homologues sur la base de la fonction déterminée pour chacun d'au moins deux dispositifs homologues et les au moins deux dispositifs homologues, et pour commander la première unité de communication et la deuxième unité de communication pour communiquer simultanément, en fonction des différentes bandes de fréquences déterminées, avec les au moins deux dispositifs homologues selon le mode de fonctionnement déterminé,
où la pluralité de modes de fonctionnement comprend un mode répéteur qui transmet un signal reçu à travers la première unité de communication directement à la deuxième unité de communication sans passer par le processeur, et un mode double qui transmet le signal reçu à travers la première unité de communication au processeur et envoie simultanément un signal du processeur à la deuxième unité de communication.

2. Dispositif électronique selon la revendication 1, où la première unité de communication et la deuxième unité de communication comprennent chacune une unité de radiofréquence, RF, une couche physique, PHY, et une couche de contrôle d'accès au support, MAC, et
où la première unité de communication et la deuxième unité de communication sont séparées fonctionnellement.

3. Dispositif électronique selon la revendication 1, où, lorsque le mode de fonctionnement est le mode double, le processeur émet / reçoit des signaux avec la première unité de communication par l'intermédiaire d'une première interface d'hôte et émet / reçoit simultanément des signaux avec la deuxième unité de communication par l'intermédiaire d'une deuxième interface d'hôte.

4. Dispositif électronique selon la revendication 1, où, lorsque le mode de fonctionnement est le mode double, le processeur émet / reçoit des paquets fragmentés avec la première unité de communication et la deuxième unité de communication à tour de rôle par l'intermédiaire d'une première interface d'hôte.

5. Dispositif électronique selon la revendication 1,
où, lors de la détermination des différentes bandes de fréquences pour communiquer avec les au moins deux dispositifs homologues, le processeur détermine les différentes bandes de fréquences pour les au moins deux dispositifs homologues sur la base d'informations de la première bande de fréquences correspondant à la fonction déterminée et d'informations de la deuxième bande de fréquences pour les au moins deux dispositifs homologues.

6. Procédé pour fournir un service simultané d'un dispositif électronique, le procédé comprenant :
déterminer, sur la base d'entrées d'utilisateur, une fonction à être exécutée pour chacun d'au moins deux dispositifs homologues ;
déterminer, sur la base d'informations pré-stockées sur une pluralité de modes de fonctionnement, un mode de fonctionnement correspondant à la fonction déterminée à être exécutée pour chacun d'au moins deux dispositifs homologues ;
déterminer des différentes bandes de fréquences pour les au moins deux dispositifs homologues sur la base de la fonction déterminée pour chacun d'au moins deux dispositifs homologues et les au moins deux dispositifs homologues ; et
émettre / recevoir, sur une première unité de communication et une deuxième unité de communication qui utilisent les différentes bandes de fréquences déterminées, des signaux avec les au moins deux dispositifs homologues en même temps selon le mode de fonctionnement déterminé,
où la pluralité de modes de fonctionnement comprend un mode répéteur qui transmet un signal reçu à travers la première unité de communication directement à la deuxième unité de communication sans passer par le processeur, et un mode double qui transmet le signal reçu à travers la première unité de communication au processeur et envoie simultanément un signal du processeur à la deuxième unité de communication.

7. Procédé selon la revendication 6, où la première unité de communication et la deuxième unité de communication comprennent chacune une unité de radiofréquence, RF, une couche physique, PHY, et une couche de contrôle d'accès au supporte, MAC, et
où la première unité de communication et la deuxième unité de communication sont séparées fonctionnellement.

8. Procédé selon la revendication 6, où, lorsque le mode de fonctionnement est le mode double, l'émission / réception des signaux avec les au moins deux dispositifs homologues comprend :
émettre / recevoir des signaux entre la première unité de communication et un processeur du dispositif électronique par l'intermédiaire d'une première interface d'hôte, et émettre / recevoir simultanément des signaux entre la deuxième unité de communication et le processeur par l'intermédiaire d'une deuxième interface d'hôte.

9. Procédé selon la revendication 6, où, lorsque le mode de fonctionnement est le mode double, l'émission / réception des signaux avec les au moins deux dispositifs homologues comprend :
émettre / recevoir, sur un processeur du dispositif électronique, des paquets fragmentés avec la première unité de communication et la deuxième unité de communication à tour de rôle par l'intermédiaire d'une première interface d'hôte.

10. Procédé selon la revendication 6, où la détermination des différentes bandes de fréquences pour les au moins deux dispositifs homologues comprend :
déterminer les différentes bandes de fréquences pour les au moins deux dispositifs homologues sur la base d'informations de la première bande de fréquences correspondant à la fonction déterminée et d'informations de la deuxième bande de fréquences pour les au moins deux dispositifs homologues.
